# EUROPÄISCHE PATENTSCHRIFT

(11) **EP 1 568 472 B1**
(45) Veröffentlichungstag und Bekanntmachung des Hinweises auf die Patenterteilung: **25.04.2007**
(21) Anmeldenummer: 05003728.2
(22) Anmeldetag: 22.02.2005
(51) Int. Cl.: B29C 67/00, A61C 13/00, B22F 3/105, B29C 35/08

(54) **Verfahren und Vorrichtung zum Herstellen von Produkten durch Sintern und/oder Schmelzen**
Method and device for producing parts by sintering and/or melting
Procédé et dispositif de fabrication de produits par frittage et/ou fusion

(30) Priorität: 25.02.2004 DE 102004009127
(43) Veröffentlichungstag der Anmeldung: 31.08.2005
(73) Patentinhaber: BEGO Medical GmbH, 28359 Bremen (DE)
(72) Erfinder: Uckelmann, Ingo, 28309 Bremen (DE)
(74) Vertreter: Eisenführ, Speiser & Partner

(56) Entgegenhaltungen:
- EP-A- 1 296 788
- US-A- 5 393 482
- US-A- 5 427 733
- US-A- 5 908 569
- US-A1- 2003 201 255

## Beschreibung

Die Erfindung gemäß dem Oberbegriff des Anspruchs 1 betrifft ein Verfahren zum Herstellen von Produkten durch Freiform-Sintern und/oder Schmelzen, bei dem die Produkte mittels eines datengesteuert geführten hochenergetischen Strahls aus einem schichtweise aufzubringenden Werkstoff Schicht für Schicht aufgebaut werden.

Ferner betrifft die Erfindung eine Vorrichtung gemäß dem Oberbegriff des Anspruchs 10 zur Durchführung eines derartigen Verfahrens, wobei die Vorrichtung aufweist: eine Strahlquelle zum Erzeugen dieses Strahls, eine Plattform zur Aufnahme eines schichtweise aufbringbaren Werkstoffs und eine Steuerung zum Steuern des Strahls, mittels derer der Strahl datengesteuert geführt werden kann, um die Produkte aus dem Werkstoff Schicht für Schicht aufzubauen.

Derartige Verfahren und Vorrichtungen sind bekannt. Sie werden unter anderem im Bereich der Herstellung von Dentalprodukten, wie bspw. Zahnkronen, Zahnbrücken, Implantaten, etc. eingesetzt. Sie können aber auch für andere Anwendungen Verwendung finden.

Aus US 5,908,569 ist eine Vorrichtung gemäß dem Oberbegriff des Anspruchs 10 und ein Verfahren gemäß dem Oberbegriff des Anspruchs 1 zum Herstellen dreidimensionaler Objekte durch Lasersintern bekannt, bei der ein Laserstrahl mittels eines Ablenkspiegels über eine Pulverschicht gelenkt wird, um die Punkte entsprechend des Querschnitts des zu formenden Objekts abzufahren und das Pulver an diesen Punkten zu sintern. Aus US 5,427,733 ist eine ebensolche Vorrichtung bekannt, bei der der Laserstrahl in aufeinanderfolgenden Linien über eine Pulverschicht geführt wird, um das Pulver im Bereich des fokussierten Strahls zu verbinden.

Diese bekannten Vorrichtungen sind jedoch wegen der geforderten hohen Präzision der herzustellenden Produkte sehr aufwändig ausgestattet und daher sehr kostspielig. Die Stückkosten der herzustellenden Produkte können jedoch gesenkt werden, wenn die Fertigungszeit eines herzustellenden Produkts reduziert wird. Dadurch kann nämlich die Effizienz einer derartigen Vorrichtung erhöht werden.

Der Erfindung liegt daher das technische Problem zugrunde, die Fertigungszeit bei der Herstellung von Produkten durch Freiform-Sintern und/oder -Schmelzen zu senken.

Die Erfindung löst dieses Problem bei einem Verfahren der eingangs genannten Art dadurch, dass der hochenergetische Strahl vorbestimmte Positionen einer Werkstoffschicht jeweils mehrfach, nämlich m-fach, bestrahlt, wobei m eine ganze Zahl größer als 1 ist, wobei für jede dieser Positionen gilt, dass sie beim ersten Bestrahlen zunächst auf eine Temperatur unterhalb der Schmelztemperatur des Werkstoffs erhitzt und beim m-ten Bestrahlen auf eine m-te Temperatur oberhalb dieser Schmelztemperatur erhitzt und dabei derart vollständig über die gesamte Schichtdicke hinweg aufgeschmolzen wird, dass sich der Werkstoff an dieser Position mit der darunter liegenden Schicht verbindet , gemäß dem Anspruch 1.

Die Erfindung löst dieses Problem ferner durch eine Vorrichtung der eingangs genannten Art, bei der die Steuerung derart ausgebildet ist, dass mittels der Steuerung der Strahl wie vorstehend ausgeführt gesteuert werden kann , gemäß dem Anspruch 10.

Die Erfindung hat erkannt, dass die Fertigungszeit gesenkt werden kann, wenn die Energie des hochenergetischen Strahls in den Werkstoff in mehreren Schritten eingekoppelt wird. Im ersten Schritt erfolgt eine Energieeinkopplung an einer bestimmten Position der Werkstoffschicht bis der entsprechende Bereich der Werkstoffschicht an dieser Position auf eine Temperatur kurz unterhalb des Schmelzpunktes erhitzt worden ist. Im letzten Schritt der Energieeinkopplung erhitzt dann der Strahl diesen Bereich über die Schmelztemperatur und verschmilzt dabei den Werkstoff mit der darunter liegenden Schicht. Auf diese Weise wird das herzustellende Produkte geformt.

Beim Schmelzen bzw. Sintern mittels eines hochenergetischen Strahls ist es wichtig, dass jeder von dem Strahl erfasste Bereich den Schmelzpunkt des Werkstoffs erreicht, ohne dabei jedoch den Verdampfungspunkt zu überschreiten, da sonst der Werkstoff lediglich verdampfen würde, ohne dass das herzustellende Produkt geformt würde.

Der Strahl erreicht jedoch jeweils nur einen oberflächlichen Abschnitt der bestrahlten Werkstoffschicht. Daher wird zunächst lediglich die Oberfläche dieses bestrahlten Bereichs erhitzt. Die dem Strahl abgewandte Seite dieses Bereichs wird vom Strahl jedoch nicht erreicht. Die Erwärmung der abgewandten Seite erfolgt somit ausschließlich über einen Wärmetransport innerhalb dieses Bereichs. Hierdurch wird die maximale Bearbeitungsgeschwindigkeit begrenzt.

Die Erfindung überwindet aber diese Begrenzung, indem sie eine bzw. jede Position mehrmals bestrahlt, so dass ein Wärmetransport innerhalb des entsprechenden Bereichs der Werkstoffschicht von der heißen zu der kalten Seite dieses Bereichs während einer Zeitdauer erfolgen kann, während der die Oberfläche dieses Bereichs nicht bestrahlt wird. Diese Zeitdauer kann dann genutzt werden, um einen weiteren Bereich zu erhitzen. Nachdem dieser weitere Bereich erhitzt worden ist, kehrt der Strahl zurück zu dem erstgenannten Bereich und kann den Vorgang der Erhitzung fortführen bzw. vollenden.

Durch eine derartige alternierende Bestrahlung müssen während der Bestrahlung keine zeitraubenden Temperaturausgleichsvorgänge innerhalb des bestrahlten Bereichs abgewartet werden. Vielmehr können diese Temperaturausgleichsvorgänge vollzogen werden, nachdem ein Bestrahlungsvorgang vorübergehend beendet und ein anderer Bestrahlungsvorgang begonnen bzw. fortgeführt wird.

Auf diese Weise werden die Bestrahlungsdauern einzelner Positionen bzw. Bereiche des Werkstoffs wesentlich verkürzt. Diese alternierende Bestrahlung erlaubt ferner eine höhere Leistung der Strahlquelle, z.B. eines Lasers oder einer Elektronenstrahlquelle, und damit eine höhere Energiezufuhr an der jeweiligen Position. Die Gefahr explosionsartiger Verdampfungen kleiner Werkstoffpartikel wird nämlich dadurch erheblich reduziert, dass nach kurzer Zeit der Strahl auf eine andere Position gerichtet wird.

Bei einer besonders bevorzugten Ausführungsform werden die zu bestrahlenden Positionen einer Werkstoffschicht zweifach bestrahlt. Dabei wird jede dieser Positionen zunächst mit einer ersten Zeitdauer bestrahlt und dann während einer zweiten Zeitdauer nicht bestrahlt. Dabei ist die zweite Zeitdauer der Nicht-Bestrahlung wenigstens genau so lang oder doppelt so lang wie die erste Zeitdauer der Bestrahlung.

Bei einer weiteren bevorzugten Ausführungsform werden die zu bestrahlenden Positionen einer Werkstoffschicht dreifach bestrahlt. Dabei wird jede dieser Positionen wiederum zunächst mit einer ersten Zeitdauer bestrahlt und dann während einer zweiten Zeitdauer nicht bestrahlt. Dieser Vorgang wird dann an dieser Position wiederholt. Schließlich erfolgt eine dritte Bestrahlung mit der ersten Zeitdauer. Dabei ist die zweite Zeitdauer der Nicht-Bestrahlung jeweils wenigstens genau so lang, doppelt so lang oder viermal so lang wie die erste Zeitdauer der Bestrahlung.

Bei einer besonders bevorzugten Ausführungsform wird der Strahl mit einer ersten im wesentlichen linearen Bewegung vorwärts und rückwärts geführt.

Dabei legt die vorwärts gerichtete Bewegung eine längere Wegstrecke zurück als die rückwärts gerichtete Bewegung. Auf diese Weise erreicht man eine einfache Alternierung der Bestrahlung/Nicht-Bestrahlung von in einer benachbarten Umgebung liegenden Positionen.

Bevorzugt wird dabei dieser ersten Bewegung eine zweite, mäanderförmige Bewegung überlagert. Auf diese Weise können flächenhaft ausgeformte Bereiche des herzustellenden Produktes besonders gleichmäßig erzeugt werden.

Bei einer weiteren bevorzugten Ausführungsform wird während und/oder nach dem Bestrahlen einer Schicht eine entstehende bzw. entstandene Kontur des Produkts optisch vermessen. Die auf diese Weise gewonnenen Messdaten werden dann mit Solldaten verglichen. Wird bei diesem Vergleich eine Abweichung festgestellt, wird der Strahl entsprechend der festgestellten Abweichung geregelt. Auf diese Weise kann die Präzision und Maßhaltigkeit der herzustellenden Produkte weiter verbessert werden.

Weitere bevorzugte Ausführungsformen ergeben sich aus den anhand der beigefügten Zeichnungen näher erläuterten Ausführungsbeispiele. Es zeigt:
- Fig. 1: eine schematische Schnittansicht einer Vorrichtung zum Herstellen von Produkten durch Freiform-Lasersintern und/oder -schmelzen gemäß einem Ausführungsbeispiel der Erfindung;
- Fig. 2: eine schematische Darstellung zur Veranschaulichung der Wärmeeinkopplung und des Temperaturausgleichvorgangs innerhalb eines Pulverkorns eines pulverförmigen Werkstoffs beim Lasersintern bzw. -schmelzen;
- Fig. 3: ein Diagramm zur Veranschaulichung des zeitlichen Verlaufs der Temperaturen am bzw. im Pulverkorn an der einem Laserstrahl zugewandten und der dem Laserstrahl abgewandten Seite bei zwei verschiedenen Bestrahlungsstrategien;
- Fig. 4: eine mögliche Führung eines Laserstrahls zur Bestrahlung vorbestimmter Positionen;
- Fig. 5: eine weitere mögliche Führung eines Laserstrahls zur Bestrahlung vorbestimmter Positionen; und
- Fig. 6: ein weiteres Diagramm zur Veranschaulichung des zeitlichen Verlaufs der Temperaturen am bzw. im Pulverkorn an der einem Laserstrahl zugewandten und der dem Laserstrahl abgewandten Seite bei zwei verschiedenen Bestrahlungsstrategien.

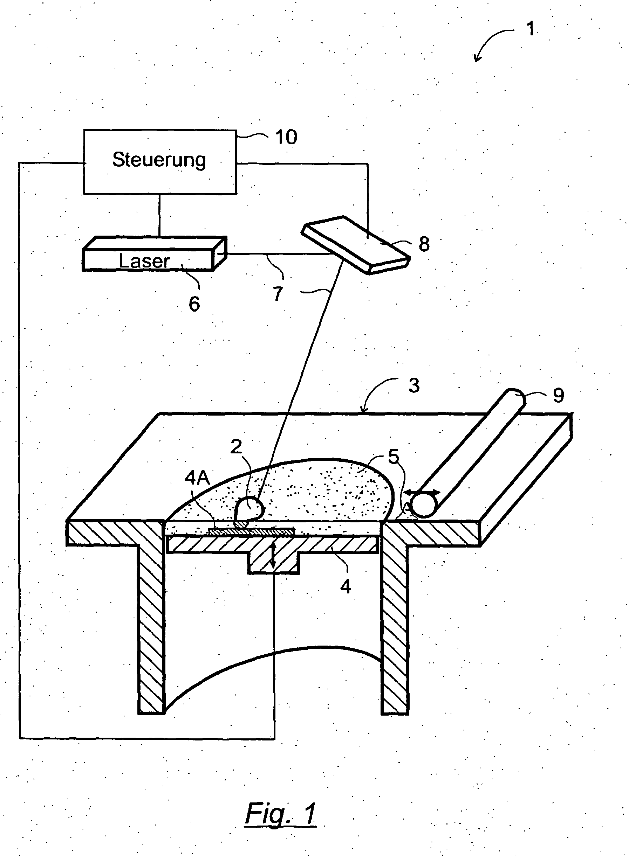

Fig. 1 zeigt eine Vorrichtung 1 zum Herstellen von metallischen und/oder nichtmetallischen Produkten 2, insbesondere von Dentalprodukten, wie Zahnkronen, - brücken, -implantaten etc., durch Freiform-Lasersintern und/oder -schmelzen. Die Vorrichtung 1 weist einen Tisch 3 mit einer höhenverstellbaren Plattform 4 auf, auf der eine Substratplatte 4A liegt. Die Plattform 4 ist über einen nicht dargestellten Antrieb in ihrer Höhe schrittweise, insbesondere in an die Größe von Pulverkörnern eines in Pulverform vorliegenden Werkstoffs 5 angepassten Schritten, verstellbar.

Die Vorrichtung 1 weist ferner einen oberhalb des Tisches 3 angeordneten Laser 6, bspw. einen CO₂-Laser, auf, dessen Strahl 7 durch eine geeignete Vorrichtung, insbesondere ein computergesteuertes Spiegelgalvanometer 8, geführt wird.

Die Vorrichtung 1 weist ferner einen Beschichtungsmechanismus 9 auf, mittels dessen der pulverförmige Werkstoff 5 gleichmäßig über die Oberfläche des Tisches 3 verteilt wird, so dass insbesondere der Raum zwischen der Oberfläche der Plattform 4 und der Oberfläche des Tisches 3 bis an die Oberfläche des Tisches 3 mit pulverförmigem Werkstoff 5 aufgefüllt wird

Die Herstellung eines Produktes 2 verläuft wie folgt: Zunächst befindet sich die Plattform 4 in einer oberen Ausgangsposition. Sodann wird der Laser 6 aktiviert und sein Laserstrahl 7 auf den pulverförmigen Werkstoff 5 gerichtet. Der Laserstrahl 7 verfestigt und schmilzt aufgrund der von ihm erzeugen Hitze den pulverförmigen Werkstoff 5, der - je nach Höhe der auf den pulverförmigen Werkstoff 5 aufgebrachten Energie - mit umgebenden Pulverkörnern gesintert bzw. verschmolzen wird. Der Laserstrahl 7 bestrahlt entsprechend einer vorprogrammierten Form des herzustellenden Produktes 2, das heißt datengesteuert, vorbestimmte Positionen des pulverförmigen Werkstoffs 5. An den vom Laserstrahl 7 bestrahlten Bereichen entsteht eine Schicht verschmolzenen oder gesinterten Materials.

Sobald eine Schicht fertiggestellt ist, wird der Laser 6 deaktiviert und die Plattform 4 um ein Schichtdicke, die beispielsweise an den durchschnittlichen Durchmesser der Pulverkörner des Werkstoffs 5 angepasst ist, abgesenkt. Mittels des Beschichtungsmechanismus 9 wird anschließend eine neue Schicht pulverförmigen Werkstoffs 5 aufgetragen und glattgestrichen. Sodann wird erneut der Laser 6 aktiviert und der Laserstrahl 7 fährt wiederum computergesteuert vorbestimmte Positionen ab, innerhalb derer der pulverförmige Werkstoff 5 mit der zuvor erzeugten Schicht verschmolzen oder aufgesintert werden soll, oder auch an hieran angrenzende oder auch nicht-angrenzende Bereiche. Dieser Prozess des Auftragens von Schichten von pulverförmigem Ausgangsmaterial 5 und des Sinterns bzw. Schmelzen dieser Schichten mit den zuvor aufgebrachten Schichten mittels des Laserstrahls 7 wird wiederholt durchgeführt, bis sich das Produkt 2 in der gewünschten Form ausgebildet hat.

Die Vorrichtung 1 weist eine Steuerung 10 auf, mittels derer insbesondere die Aktivierung und die Deaktivierung des Lasers 6 sowie die Positionierung des Laserstrahls 7 über das Spiegelgalvanometer 8 und die Höhenverstellung der Plattform 4 gesteuert wird. Die Koordinierung dieser Komponenten der Vorrichtung 1 gewährleistet die gewünschte Ausbildung der Produkte 2.

Die Steuerung 10 erzeugt ihre Befehle einerseits in Abhängigkeit von vorab gespeicherten Modelldaten des Produkts. Andererseits erzeugt die Steuerung 10 ihre Befehle in Abhängigkeit von während und/oder nach dem Bestrahlen einer Schicht durch optische Vermessung einer entstehenden bzw. entstandenen Kontur des Produkts 2 gewonnenen Messdaten. Diese gewonnenen Meßdaten werden von der Steuerung 10 mit Solldaten verglichen. Wird bei diesem Vergleich eine Abweichung der Solldaten von den Messdaten festgestellt, wird der Laserstrahl 7 mittels der Steuerung 10 durch Einwirkung auf den Laser 6 und das Spiegelgalvanometer 8 entsprechend der festgestellten Abweichung geregelt.

Der Laserstrahl 7 ist zur Erreichung einer hohen Energiedichte sehr stark gebündelt. Der Laserstrahl 7 trifft daher nahezu punktförmig auf den Werkstoff 5 auf. Ein solcher "Punkt" hat jedoch eine flächenhafte Ausdehnung.

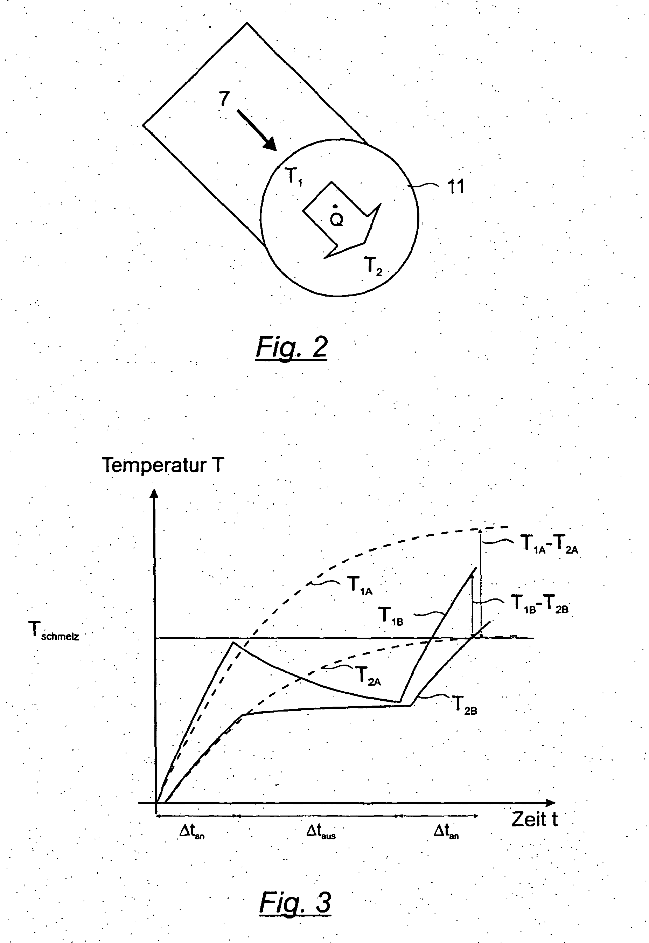

Fig. 2 zeigt den Laserstrahl 7 in einer stark vergrößerten Darstellung, wie er auf ein Pulverkorn 11 des pulverförmigen Werkstoffs 5 auftrifft. Beim Lasersintern bzw. Laserschmelzen muss eine Vielzahl der schichtweise aufgebrachten Pulverkörner 11 vollständig aufgeschmolzen und mit der darunter liegenden Schicht verschmolzen werden. Dazu muss jede Stelle innerhalb des Pulverkorns 11 den Schmelzpunkt des Werkstoffs erreichen, ohne dabei jedoch den Verdampfungspunkt zu überschreiten.

Der einfallende Laserstrahl 7 erhitzt die Oberfläche des Pulverkorns 11. Jedoch wird die dem Laserstrahl 7 abgewandte Seite des Korns 11 nicht von der Laserstrahlung direkt erreicht. Die Erwärmung dieser abgewandten Seite erfolgt somit ausschließlich über einen Wärmetransport Q innerhalb des Pulverkorns 11. Ein Pulverkorn 11 weist somit zwei Stellen mit extremen Temperaturwerten auf, nämlich eine erste hohe Temperatur T₁ an der dem Laserstrahl 7 zugewandten Seite und eine vergleichsweise niedrige Temperatur T₂ an der dem Laserstrahl 7 abgewandten Seite des Pulverkorns 11.

Wie oben bereits ausgeführt, muss auch die niedrige Temperatur T₂ den Schmelzpunkt des Werkstoffs erreichen. Währenddessen darf jedoch die hohe Temperatur T₁ nicht den Verdampfungspunkt überschreiten. Infolge des Wärmetransports Q innerhalb des Pulverkorns 11 ergibt sich eine maximal zulässige Temperaturdifferenz T₁-T₂, welche eine maximale Bearbeitungsgeschwindigkeit begrenzt.

Fig. 3 zeigt den Verlauf der Temperaturen an der dem Laserstrahl 7 zugewandten und der dem Laserstrahl abgewanden Seite an einem Pulverkorn und zwar für zwei Bestrahlungsstrategien (A und B).

Die erste Bestrahlungsstrategie (A) ist mit gestrichelten Linien dargestellt. Sie entspricht der herkömmlichen Vorgehensweise. Der zeitliche Temperaturverlauf T_{1A} beschreibt die Temperatur an der dem Laserstrahl zugewandten Seite des Pulverkorns 11. In entsprechender Weise beschreibt der Temperaturverlauf T_{2A} die Temperatur an der dem Laserstrahl abgewandten Seite. Das Pulverkorn 11 ist vollständig aufgeschmolzen, wenn sowohl die Temperatur T_{1A} als auch die Temperatur T_{2A} die Schmelztemperatur T_{schmelz} überschritten hat. Nach Überschreiten dieser Schmelztemperatur auch an der dem Laserstrahl abgewandten Seite des Pulverkorns kann mit dem Aufschmelzen der nächsten Position begonnen werden.

Eine zweite Bestrahlungsstrategie (B) ist in der Fig. 3 mit ausgezogenen Linien dargestellt. Diese Bestrahlungsstrategie entspricht einem Ausführungsbeispiel der vorliegenden Erfindung. Der Temperaturverlauf T_{1B} bezeichnet die Temperatur an der dem Laserstrahl 7 zugewandten Seite des Pulverkorns 11, während der Temperaturverlauf T_{2B} die Temperatur an der dem Laserstrahl 7 abgewandten Seite des Pulverkorns 11 beschreibt.

Der Laserstrahl 7 wird zunächst für eine Zeitdauer Δtₐₙ eingeschaltet. Die dem Laserstrahl 7 zugewandte Seite des Pulverkorns 11 beginnt sich zu erhitzen bis zu einer Temperatur unterhalb der Schmelztemperatur T_{schmelz}. Sodann wird der Laserstrahl nicht mehr auf diese Position gerichtet, so dass keine Energieeinkopplung mehr an dieser Position stattfindet. Die Zeitdauer der ausbleibenden Energieeinkopplung bzw. Nicht-Bestrahlung dieser Position ist in Fig. 3 mit Δtₐᵤₛ gekennzeichnet. Sodann wird der Laserstrahl erneut auf dieselbe Position gerichtet, so dass erneut eine Energieeinkopplung stattfindet, was wiederum zu einem starken Anstieg der Temperatur T_{1B} für eine Zeitdauer Δtₐₙ führt. Die Temperatur an der dem Laserstrahl abgewandten Seite des Pulverkorns 11 zieht kurze Zeit später ebenfalls erheblich an, bis die Schmelztemperatur T_{schmelz} erreicht wird.

Bei dieser erfindungsgemäßen Strategie wird also eine Position auf der Pulverschicht mehrmals nacheinander bestrahlt, so dass während der Zeitdauern der Nicht-Bestrahlung ein Ausgleichsvorgang innerhalb des zuvor bestrahlten Werkstoffpartikels stattfinden und während dieser Zeit eine andere Position der Pulverschicht bestrahlt werden kann. Aufgrund dieser Bestrahlungsstrategie verringert sich die Temperaturdifferenz T_{1B}-T_{2B} gegenüber der Temperaturdifferenz T_{1A}-T_{2A} insbesondere zum Zeitpunkt der vollständigen Aufschmelzung eines Pulverkoms. Dank dieser verminderten Temperaturdifferenz kann eine höhere Laserleistung verwendet werden, so dass die Fertigungszeit verkürzt werden kann. Des weiteren kann während der Zeitdauern Δtₐᵤₛ mit der Erhitzung weiterer Punkte begonnen werden. Insgesamt erreicht man somit eine erhebliche Verkürzung der Fertigungszeiten. Schließlich hat diese Bestrahlungsstrategie auch den Vorteil, dass explosionsartige Verdampfungen kleinerer Pulverkörner vermieden werden können, da die Verweildauern des Laserstrahls an einzelnen Positionen wesentlich kürzer ist als bei der herkömmlichen Bestrahlungsstrategie (A).

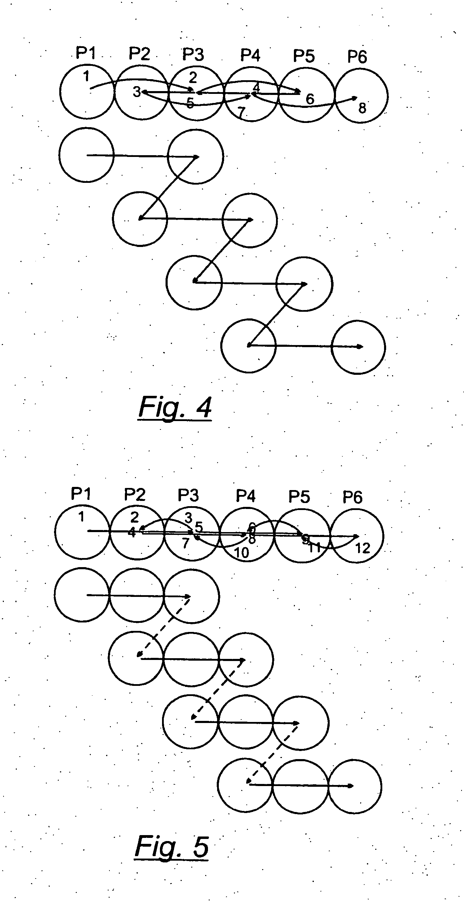

Fig. 4 veranschaulicht die Führung des Laserstrahls entlang vorbestimmter Positionen P1, P2, P3, P4, P5 und P6. Der Laserstrahl wird zunächst auf die Position P1 gerichtet und zwar für die Dauer Δtₐₙ. Sodann wird der Laserstrahl auf die übernächste Position P3 gerichtet, um ebenfalls für eine Zeitdauer Δtₐₙ diese Position zu erhitzen. Anschließend wird der Laserstrahl wieder zurückgeführt, um die zwischen den Positionen P1 und P3 liegende Position P2 zu bestrahlen. Dort verweilt der Laserstrahl ebenfalls für eine Zeitdauer Δtₐₙ. Anschließend überspringt der Laserstrahl wieder die Position P3 und wird auf die folgende Position P4 gerichtet und zwar wiederum für eine Zeitdauer Δtₐₙ. Anschließend wird der Laserstrahl erneut auf die Position P3 gerichtet, um wiederum auf dieser Position P3 für eine Zeitdauer Δtₐₙ zu verweilen.

Man erkennt, dass der Laserstrahl die Position P3 zweimal bestrahlt, und zwar jeweils für die Zeitdauer Δtₐₙ und während einer Zeitdauer Δtₐᵤₛ, die im wesentlichen dem doppelten der Zeitdauer Δtₐₙ entspricht, diese Position nicht bestrahlt.

Die Erfindung ist jedoch nicht auf eine derartige Bestrahlungsstrategie beschränkt. Vielmehr umfasst sie auch andere Bestrahlungsstrategien.

Fig. 5 zeigt eine weitere Bestrahlungsstrategie, bei der jede einzelne Position dreifach bestrahlt wird. Die Bestrahlung erfolgt hier in der Reihenfolge P1, P2, P3, P2, P3, P4, P3, P4, P5, P4, P5, P6, ...

Bei dieser Bestrahlungsstrategie ist die Zeitdauer der Nicht-Bestrahlung zwischen zwei Bestrahlungsvorgängen derselben Position im wesentlichen genau so lang wie die Zeitdauer der Bestrahlung der einzelnen Positionen.

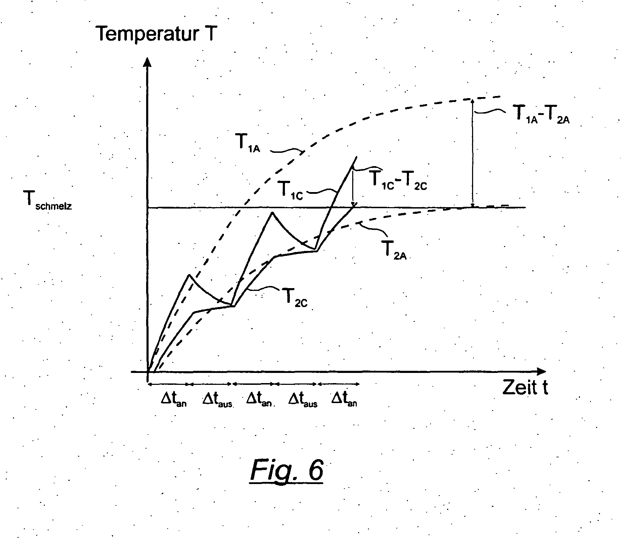

Fig. 6 zeigt die entsprechenden Temperaturverläufe T_{1C} und T_{2C} entsprechend der Darstellung in Fig. 3. Zur Gegenüberstellung ist wiederum auch der Temperaturverlauf bei einmaliger Bestrahlung jeder einzelnen Position T_{1A} und T_{2A} in gestrichelten Linien (Bestrahlungsstrategie A) dargestellt.

Die ausgezogenen Linien in Fig. 6 zeigen jedoch, dass während einer ersten Bestrahlungsdauer Δtₐₙ ein erster Temperaturwert unterhalb der Schmelztemperatur T_{schmelz} erreicht wird. Auch während eines zweiten Bestrahlungsvorganges für die Zeitdauer Δtₐₙ erfolgt zwar eine Erhöhung der Temperatur der entsprechenden Position, jedoch ebenfalls nur bis zu einer Temperatur kurz unterhalb der Schmelztemperatur T_{schmelz}. Erst während eines dritten Bestrahlungsvorganges überschreitet dann die Temperatur T_{1B} und auch die Temperatur T_{2B} die Schmelztemperatur T_{schmelz}, so dass dann die jeweilige Position des pulverförmigen Werkstoffs vollständig aufgeschmolzen ist.

In den Fig. 4 und 5 ist jeweils eine im wesentlichen lineare Bewegung des Laserstrahls vorwärts und rückwärts dargestellt, wobei die vorwärts gerichteten Bewegungen jeweils eine längere Wegstrecke vollführen, als die rückwärts gerichteten Bewegungen. Da die herzustellenden Produkte jedoch in der Regel nicht nur aus sehr dünnen linearen Konturen gebildet werden, ist diesen linearen Bewegungen des Laserstrahls jeweils noch eine zweite, mäanderförmige Bewegung überlagert. Diese mäanderförmige Bewegung dient insbesondere dazu, auch breitete Strukturen, d.h. Strukturen, die eine breitere Ausdehnung als den Durchmesser des Laserstrahls haben, zu erzeugen.

Weitere Bewegungen können dieser ersten, linearen und dieser zweiten, mäanderförmigen Bewegung überlagert werden, um komplexere Konturen des herzustellenden Produktes zu erzeugen.

Insgesamt ermöglicht die Erfindung aufgrund der mehrfachen Bestrahlung jeder einzelnen Position entlang eines vorbestimmten Weges eines Laserstrahls eine erhebliche Reduzierung der Fertigungszeiten, da quasi "gleichzeitig" an mehreren Positionen Energie zugeführt wird. Durch die Temperaturausgleichvorgänge zwischen zwei Bestrahlungsvorgängen ist darüber hinaus auch eine höhere Laserleistung problemlos verwendbar, ohne dass es zu explosionsartigen Verdampfungen, insbesondere kleinerer Pulverkörner kommt. Insgesamt erlaubt die Erfindung damit eine effizienter Ausnutzung von Vorrichtungen zum Freiform-Lasersintern bzw. -schmelzen

Vorstehend wurde die Erfindung zwar im Zusammenhang mit Lasersintern bzw. Laserschmelzen erläutert. Die Erfindung ist jedoch nicht auf die Verwendung eines Laserstrahls zum Sintern bzw. Schmelzen beschränkt. Statt eines Laserstrahls kann z.B. auch ein Elektronenstrahl verwendet werden. Daher kann der vorstehend beschriebene Laser ohne weiteres auch durch eine Elektronenstrahlquelle ersetzt werden. Allgemein bezieht sich daher die Erfindung auf jedwede Art eines Sinter- bzw. Schmelzvorgangs, der durch einen hochenergetischen Strahl aus einer entsprechenden Quelle für einen derartigen hochenergetischen Strahl erzeugt wird.

## Patentansprüche

1. Verfahren zum Herstellen von Produkten durch Freiformsintern und/oder -schmelzen, bei dem die Produkte (2) mittels eines datengesteuert geführten hochenergetischen Strahls (7) aus einem schichtweise aufzubringenden Werkstoff (5) Schicht für Schicht aufgebaut werden,
**dadurch gekennzeichnet, dass**
der Strahl (7) vorbestimmte Positionen (P1-P6) einer Werkstoffschicht jeweils mehrfach, nämlich m-fach, bestrahlt, wobei m eine ganze Zahl größer als 1 ist, wobei für jede dieser Positionen (P1-P6) gilt, dass sie beim ersten Bestrahlen zunächst auf eine Temperatur unterhalb der Schmelztemperatur (T_{schmelz}) des Werkstoffs (5) erhitzt und beim m-ten Bestrahlen auf eine m-te Temperatur oberhalb dieser Schmelztemperatur (T_{schmelz}) erhitzt und dabei derart vollständig über die gesamte Schichtdicke hinweg aufgeschmolzen wird, dass sich der Werkstoff (5) an dieser Position (P1-P6) mit der darunter liegenden Schicht verbindet.

2. Verfahren nach Anspruch 1,
**dadurch gekennzeichnet, dass**
m gleich 2 ist.

3. Verfahren nach Anspruch 1 oder 2,
**dadurch gekennzeichnet, dass**
jede dieser Positionen (P1-P6) jeweils mit einer ersten Zeitdauer (Δtₐₙ) bestrahlt und dann während einer zweiten Zeitdauer (Δtₐᵤₛ) nicht bestrahlt wird, wobei die zweite Zeitdauer (Δtₐᵤₛ) wenigstens genau so lang oder doppelt so lang ist wie die erste Zeitdauer (Δtₐₙ).

4. Verfahren nach Anspruch 1,
**dadurch gekennzeichnet, dass**
m gleich 3 ist.

5. Verfahren nach Anspruch 4,
**dadurch gekennzeichnet, dass**
jede dieser Positionen (P1-P6) jeweils mit einer ersten Zeitdauer (Δtₐₙ) bestrahlt und dann während einer zweiten Zeitdauer (Δtₐᵤₛ) nicht bestrahlt wird, wobei die zweite Zeitdauer (Δtₐᵤₛ) wenigstens genau so lang, doppelt so lang oder vier mal so lang ist, wie die erste Zeitdauer (Δtₐₙ).

6. Verfahren nach einem der vorhergehenden Ansprüche,
**dadurch gekennzeichnet, dass**
der Strahl (7) mit einer ersten im wesentlichen linearen Bewegung vorwärts und rückwärts geführt wird, wobei die vorwärts gerichtete Bewegung eine längere Wegstrecke zurücklegt als die rückwärts gerichtete Bewegung.

7. Verfahren nach Anspruch 6,
**dadurch gekennzeichnet, dass**
dieser ersten Bewegung eine zweite mäanderförmige Bewegung überlagert ist.

8. Verfahren nach einem der vorhergehenden Ansprüche,
**dadurch gekennzeichnet, dass**
ein pulverförmiger Werkstoff (5) verwendet wird.

9. Verfahren nach einem der vorhergehenden Ansprüche,
**dadurch gekennzeichnet, dass**
während und/oder nach dem Bestrahlen einer Schicht eine entstehende bzw. entstandene Kontur des Produkts (2) optisch vermessen wird und die auf diese Weise gewonnenen Messdaten mit Solldaten verglichen und beim Feststellen einer Abweichung der Strahl (7) entsprechend der festgestellten Abweichung geregelt wird.

10. Vorrichtung zum Herstellen von Produkten durch Freiformsintern und/oder -schmelzen mittels eines hochenergetischen Strahls (7) und zur Durchführung eines Verfahrens nach einem der Ansprüche 1-9, wobei die Vorrichtung aufweist:
eine Strahlquelle (6) zum Erzeugen dieses Strahls (7),
eine Plattform (4) zur Aufnahme eines schichtweise aufbringbaren Werkstoffs (5) und
eine Steuerung (10) zum Steuern des Strahls (7), mittels derer der Strahl (7) datengesteuert geführt werden kann, um die Produkte (2) aus dem Werkstoff (5) Schicht für Schicht aufzubauen,
**dadurch gekennzeichnet, dass**
die Steuerung (10) derart ausgebildet ist, dass mittels der Steuerung (10) der Strahl (7) vorbestimmte Positionen (P1-P6) einer Werkstoffschicht jeweils mehrfach, nämlich m-fach, bestrahlt, wobei m eine Ganzzahl größer als 1 ist, und wobei die Steuerung ausgebildet ist, um jede dieser Positionen (P1-P6) beim ersten Bestrahlen zunächst auf eine Temperatur unterhalb der Schmelztemperatur (T_{schmelz}) des Werkstoffs (5) zu erhitzen und um jede dieser Positionen (P1-P6) beim m-ten Bestrahlen auf eine m-te Temperatur dieser Schmelztemperatur (T_{schmelz}) zu erhitzen und wobei die Steuerung ausgebildet ist, um jede dieser Positionen derart vollständig über die gesamte Schichtdecke hinweg aufzuschmelzen, dass sich der Werkstoff (5) an dieser Position (P1-P6) mit der darunter liegenden Schicht verbindet.

## Claims

1. A method of preparing products by free-form sintering and/or melting, in which the products (2) are built up layer by layer by means of a high-energy beam (7), directed in a data-controlled manner, from a material (5) to be applied in layers,
**characterized in that**
the beam (7) irradiates pre-determined positions (P1 to P6) of a layer of material a multiplicity of times, namely m times, in each case, wherein m is a whole number greater than 1, wherein it is the case for each of the said positions (P1 to P6) that during the first irradiation it is heated first to a temperature below the melting temperature (T_{schmelz}) of the material (5) and during the m-th irradiation it is heated to an m-th temperature above the said melting temperature (T_{schmelz}) and, during this, it is melted completely over the entire thickness of the layer in such a way that the material (5) is joined at the said position (P1 to P6) to the layer situated thereunder.

2. A method according to Claim 1, **characterized in that** m is equal to 2.

3. A method according to Claim 1 or 2, **characterized in that** each of the said positions (P1 to P6) is in each case irradiated for a first duration (Δ tₐₙ) and is then not irradiated for a second duration (Δ tₐᵤₛ), wherein the second duration (Δ tₐᵤₛ) is at least precisely as long or twice as long as the first duration (Δ tₐₙ).

4. A method according to Claim 1, **characterized in that** m is equal to 3.

5. A method according to Claim 4, **characterized in that** each of the said positions (P1 to P6) is in each case irradiated for a first duration (Δ tₐₙ) and is then not irradiated for a second duration (Δ tₐᵤₛ), wherein the second duration (Δ tₐᵤₛ) is at least precisely as long, twice as long or four times as long as the first duration (Δ tₐₙ).

6. A method according to any one of the preceding Claims, **characterized in that** the beam (7) is directed backwards and forwards with a first substantially linear motion, wherein the motion directed forwards covers a longer path than the motion directed backwards.

7. A method according to Claim 6, **characterized in that** a second meander-shaped motion is superimposed upon the said first motion.

8. A method according to any one of the preceding Claims, **characterized in that** a material (5) in the form of a powder is used.

9. A method according to any one of the preceding Claims, **characterized in that** during and/or after the irradiation of a layer a contour of the product (2) which occurs or has occurred is measured optically and the measurement data obtained in this way are compared with nominal data and, in the event that a deviation is detected, the beam (7) is regulated in accordance with the deviation detected.

10. An apparatus for preparing products by free-fonn sintering and/or melting by means of a high-energy beam (7) and in order to perform a method according to any one of Claims 1 to 9, wherein the apparatus comprises:
a radiation source (6) for generating the said beam (7),
a platform (4) for receiving a material (5) capable of being applied in layers, and
a control means (10) for controlling the beam (7), by means of which the beam (7) can be directed in a data-controlled manner in order to build up the products (2) layer by layer from the material (5),
**characterized in that**
the control means (10) is designed in such a way that the beam (7) irradiates pre-determined positions (P1 to P6) of a layer of material a multiplicity of times, namely m times, in each case by means of the control means (10), wherein m is a whole number greater than 1, and wherein the control means is designed in order to heat each of the said positions (P1 to P6) during the first irradiation first to a temperature below the melting temperature (T_{schmelz}) of the material (5) and in order to heat each of the said positions (P1 to P6) during the m-th irradiation to an m-th temperature of¹ the said melting temperature (T_{schmelz}), and wherein the control means (10) is designed in order to melt each of the said positions completely over the entire thickness of the layer in such a way that the material (5) is joined at the said position (P1 to P6) to the layer situated thereunder.
¹ *N*.*B*. The word *oberhalb* (above) might have been expected at this point, *cf*. Claim 1.

## Revendications

1. Procédé de fabrication de produits par frittage et/ou fusion libre, dans lequel les produits (2) sont élaborés couche par couche, à l'aide d'un rayon très énergétique (7) réglé par ordinateur, à partir d'un matériau (5) à appliquer par couche, **caractérisé en ce que** le rayon (7) irradie des positions prédéterminées (P1-P6) d'une couche de matériau, chaque fois plusieurs fois, à savoir m fois, où m est un nombre entier supérieur à 1, où pour chacune de ces positions (P1-P6), lors de la première irradiation, il chauffe d'abord jusqu'à une température inférieure à la température de fusion (T_{fusion}) du matériau (5) et lors de la m-ième irradiation, il chauffe jusqu'à une m-ième température au-delà de cette température de fusion (T_{fusion}) et ainsi, le matériau est complètement fondu sur toute l'épaisseur de la couche, de sorte que le matériau (5) est lié en ces positions (P1-P6) avec la couche sous-jacente.

2. Procédé selon la revendication 1, **caractérisé en ce que** m est égal à 2.

3. Procédé selon la revendication 1 ou 2, **caractérisé en ce que** chacune de ces positions (P1-P6) est irradiée chaque fois, pendant une première période (Δtₐₙ), puis non irradiée pendant une deuxième période (Δtₐᵤₛ),où la deuxième période (Δtₐᵤₛ) est au moins égale ou double de la première période (Δtₐₙ).

4. Procédé selon la revendication 1, **caractérisé en ce que** m est égal à 3.

5. Procédé selon la revendication 4, **caractérisé en ce que** chacune de ces positions (P1-P6) est irradiée chaque fois, pendant une première période (Δtₐₙ), puis non irradiée pendant une deuxième période (Δtₐᵤₛ),où la deuxième période (Δtₐᵤₛ) est au moins égale, double ou quadruple de la première période (Δtₐₙ).

6. Procédé selon l'une des revendications précédentes, **caractérisé en ce que** le rayonnement (7) est dirigé d'avant en arrière selon un premier mouvement essentiellement linéaire, où le mouvement vers l'avant couvre une distance plus longue que le mouvement vers l'arrière.

7. Procédé selon la revendication 6, **caractérisé en ce que** ce premier mouvement est combiné à un deuxième mouvement en forme de méandres.

8. Procédé selon l'une des revendications précédentes, **caractérisé en ce que** l'on utilise un matériau (5) pulvérulent.

9. Procédé selon l'une des revendications précédentes, **caractérisé en ce que** pendant ou après le rayonnement d'une couche, on mesure de manière optique, un contour à former ou formé du produit (2) et on compare les données mesurées obtenues de cette manière, aux valeurs cibles et on règle en établissant une déviation du rayon (7) correspondant à la déviation déterminée.

10. Dispositif pour la fabrication de produits par frittage et/ou fusion libre, à l'aide d'un rayon très énergétique (7) et pour réaliser un procédé selon une des revendications 1-9, où le dispositif présente :
une source de rayonnement (6) pour produire ce rayon (7),
une plate-forme (4) pour la réception d'un matériau (5) applicable par couche, et
une commande (10) pour le réglage du rayon (7), à l'aide de laquelle le rayon (7) peut être conduit par ordinateur pour élaborer le produit (2) couche par couche à partir du matériau (5), **caractérisé en ce que** la commande (10) est formée de sorte qu'à l'aide de la commande (10), le rayon (7) irradie des positions prédéterminées (P1-P6) d'une couche de matériau, chaque fois plusieurs fois, à savoir m fois, où m est un nombre entier supérieur à 1, et où la commande est formée pour chauffer chacune de ces positions (P1-P6), lors de la première irradiation, d'abord jusqu'à une température inférieure à la température de fusion (T_{fusion}) du matériau (5) et pour chauffer chacune de ces positions (P1-P6), lors de la m-ième irradiation, jusqu'à une m-ième température au-delà de cette température de fusion (T_{fusion}) et où la commande est formée pour fondre complètement le matériau sur toute l'épaisseur de la couche, de sorte que le matériau (5) est lié en ces positions (P1-P6) avec la couche sous-jacente.
